# EUROPEAN PATENT APPLICATION

(11) **EP 4 459 104 A1**
(43) Date of publication of application: **06.11.2024**
(21) Application number: 24166029.9
(22) Date of filing: 25.03.2024
(51) Int. Cl.: F01D 17/06, F01D 21/02, F02C 9/46

(54) **SINGLE PROCESSOR, SINGLE CHANNEL ELECTRONIC ENGINE CONTROL OVERSPEED PROTECTION FOR GAS TURBINE ENGINES**

(30) Priority: 24.03.2023 US 202318126112
(71) Applicant: Hamilton Sundstrand Corporation, Charlotte, NC 28217-4578 (US)
(72) Inventor: REESE, Glenn, Elkton, MD (US); GRANT, Christopher, Southampton, MA (US); VILLANO, William E., Canton, CT (US); SWITZER, Dana N., Simsbury, CT (US); GOSSE, James A., Storrs, CT (US)
(74) Representative: Dehns

(57) **Abstract**

A first speed sensor interface (106) is operatively connected to a first time-space partition of a processor (104). A second speed sensor interface (112) is operatively connected to a second time-space partition of the processor. A high side control (116) is operatively connected to the first time-time space partition to receive a discrete command from the first time-space partition, and to receive a serial command from the first time-space partition. A low side control (122) is operatively connected to the second time-time space partition to receive a discrete command from the second time-space partition, and to receive a serial command from the second time-space partition. The high side control and the low side control are configured to connect to an outside fuel shutoff device in manner that requires consensus between the high side control and the low side control to control the fuel shutoff device to shutoff fuel flow.

## Description

### BACKGROUND

### 1. Field

The present disclosure relates to engine control, and more particularly to overspeed protection for gas turbine engines.

### 2. Description of Related Art

Electronic Engine Control Units (EECUs) usually feature a primary control function, and an overspeed protection function, which is independent from the primary control function. The primary control function's main purpose is to generate and provide a control signal to an engine effector to modulate fuel flow to a gas turbine engine. The overspeed protection function detects when a gas turbine engine is overspeeding, and then sends a command to an engine component, such as a solenoid, to shut off fuel to the engine. Failures that cause loss of control of fuel flow, resulting in loss of engine control/overspeed, can be caused by failures within the primary control function. Therefore, the overspeed protection function must be independent from the primary control function in order to ensure that a single point failure cannot both cause a loss of control of fuel flow/loss of engine control, and loss of overspeed protection function. However, EECUs should also not have single point failure scenarios that result in fuel shutoff when an overspeed event is not occurring. Meeting this for the overspeed protection function in a single control channel EECUs poses challenges, and would typically warrant multiple processing units, e.g. multiple processors or field-programmable gate arrays (FPGAs), to avoid single point failure scenarios that result in fuel shutoff.

The conventional techniques have been considered satisfactory for their intended purpose. However, there is an ever present need for improved systems and methods for overspeed protection. This disclosure provides a solution for this need.

### SUMMARY

A system includes a processor. A first speed sensor interface is operatively connected to a first time-space partition of the processor. The first speed sensor interface is configured to receive input from a sensor package and to provide output indicative of engine speed to the first time-space partition based on the input from the sensor package. A second speed sensor interface is operatively connected to a second time-space partition of the processor. The first speed sensor interface is configured to receive input from a sensor package and to provide output indicative of engine speed to the second time-space partition based on the input from the sensor package. A high side control is operatively connected to the first time-time space partition to receive a discrete command from the first time-space partition, and to receive a serial command from the first time-space partition. A low side control is operatively connected to the second time-time space partition to receive a discrete command from the second time-space partition, and to receive a serial command from the second time-space partition. The high side control and the low side control are configured to connect to an outside fuel shutoff device in manner that requires consensus between the high side control and the low side control to control the fuel shutoff device to shutoff fuel flow.

The fuel shutoff device can be operatively connected to the high side control and to the low side control to shut off fuel flow upon completion of a loop through a first switch in the high side control, through the fuel shutoff device, and through a second switch in the low side control to ensure consensus between the high side control and the low side control. The sensor package can be operatively connected to the first and second speed sensor interfaces. The sensor package can include a single sensor with a sensor channel connecting the single sensor to both the first and second speed sensor interfaces. The sensor package can include a first sensor with a first channel connecting the first sensor to the first speed sensor interface and a second sensor with a second channel connecting the second sensor to the second speed sensor interface.

The processor can include a connection for cross-partition command monitoring between the first and second time-space partitions. The first and second time-space partitions can each be configured to output a respective ON/OFF discrete command to the respective high side control and the low side control. The first and second time-space partitions can each be configured to output a respective coded series of ON/OFF bits in a predetermined pattern as serial commands to the respective high side control and the low side control to verify the ON/OFF discrete command is not in a stuck state. The first and second time-space partitions can both be within a single core of the processor. A lockstep core of the processor can be operatively connected to the single core of the processor for verifying all operations/calculations of the single core.

A method of overspeed protection for a gas turbine engine includes receiving input from a first speed sensor interface indicative of engine speed into a first time-space partition of a processor and receiving input from a second speed sensor interface indicative of engine speed into a second time-space partition of the processor. The method includes outputting a first discrete command from the first time-space partition to a high side control, outputting a first serial command from the first time space partition to the high side control, and closing a first switch of the high side control only if the first discrete command is ON and the first serial command matches a predetermined code. The method includes outputting a second discrete command from the second time-space partition to a low side control, outputting a second serial command from the second time space partition to the low side control, and closing a second switch of the low side control only if the second discrete command is ON and the second serial command matches a predetermined code. The method includes actuating a fuel shutoff device only if the first and second switches are both closed.

The method can include checking all operations/calculations of the single core with a lockstep core of the processor. The method can include receiving sensor input into both the first and second speed sensor interfaces from one sensor channel. The method can include receiving sensor input into the first speed sensor interface from a first sensor channel, and receiving sensor input into the second speed sensor interface from a second sensor channel that is independent from the first sensor channel.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

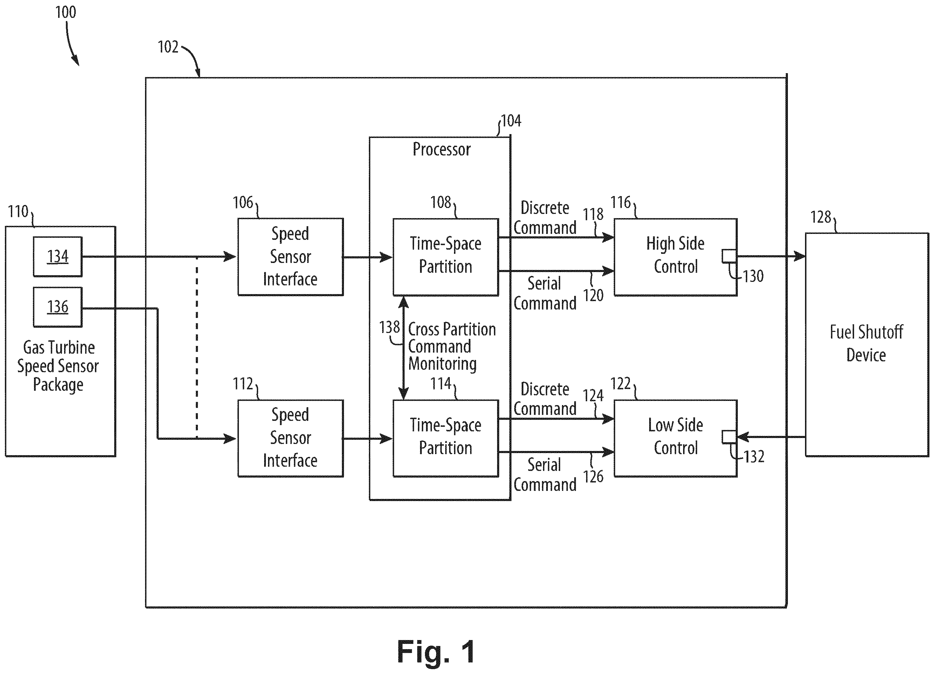

Fig. 1 is a schematic view of an embodiment of a system constructed in accordance with the present disclosure, showing the processor with two separate time-space partitions for commanding separate high and low side controls for fuel shutoff.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. The systems and methods described herein can be used to provide overspeed protection in gas turbine engines wherein the system and method do not introduce any single point failure scenarios to the overspeed protection that would result in commanding fuel off, even for single channel overspeed protection in electronic engine control units (EECUs).

The system 100 includes an EECU overspeed protection component 102, which includes a processor 104. A first speed sensor interface 106 is operatively connected to a first time-space partition 108 of the processor 104. The first speed sensor interface 106 is configured to receive input from a gas turbine speed sensor package 110 and to provide output indicative of engine speed to the first time-space partition 108 based on the input from the sensor package 110. In a two-input channel configuration, the sensor package 110 includes a first sensor 134 with a first channel connecting the first sensor 134 to the first speed sensor interface 106, and a second sensor 136 with a second channel connecting the second sensor 136 to the second speed sensor interface 112. In a single-input channel configuration, the sensor package 110 need only includes a single sensor 134 with a sensor channel connecting the single sensor 134 to both the first and second speed sensor interfaces 106, 112 as indicated in Fig. 1 with the broken line.

A second speed sensor interface 112 is operatively connected to a second time-space partition 114 of the processor. The first speed sensor interface 112 is configured to receive input from the sensor package 110 and to provide output indicative of engine speed to the second time-space partition 114 based on the input from the sensor package 110. The time-space partitions 108, 114 can each reside in a single core of the processor 104, and each reserves specific time slots on the schedule of the processor 104, as well as reserving resources of the processor 104 to perform its respective function on the processor 104. Processor 104, where the time-space partitions reside, can include a lockstep core, i.e. there can be one or more redundant cores on the processor 104 with identical configurations for cross-checking.

A high side control 116 is operatively connected to the first time-time space partition 108 to receive a discrete command 118 from the first time-space partition 108, and to receive a separate serial command 120 from the first time-space partition 108, i.e. where the discrete and serial commands 118, 120 are communicated on separate respective lines or channels. Similarly, a low side control 122 is operatively connected to the second time-time space partition 114 to receive a discrete command 124 from the second time-space partition 114, and to receive a separate serial command 126 from the second time-space partition 114, i.e. where the discrete and serial commands 124, 126 are communicated on separate respective lines or channels.

The first and second time-space partitions 108, 114 are each configured to output a respective ON/OFF discrete command 118, 124 to the respective high side control 116 and the low side control 122. The first and second time-space partitions 108, 114 are also each configured to output a respective coded series of ON/OFF bits in a predetermined pattern as serial commands 120, 126 to the respective high side control 116 and the low side control 112, i.e. on separate channels or communication lines from the discrete commands 118, 124. This allows the high and low side controls 116, 122 to verify the ON/OFF discrete commands 118, 124 are not in a stuck state. The first and second time-space partitions 108, 114 are both within a single core of the processor 104. A lockstep core of the processor 104 can be operatively connected to the single core of the processor 104 for verifying all operations/calculations of the single core. Only if both of the commands 118, 120 to the high side control 116 concur in commanding fuel shutoff, the high side control 116 commands the fuel shutoff device 128 for fuel shutoff as described below. Similarly, only if both of the commands 124, 126 to the low side control 122 commands the fuel shutoff device 128 for fuel shutoff as described below.

The high and low side controls 116, 122 are configured to connect to a fuel shutoff device 128, such as a valve with a solenoid or other actuator, a power cutoff for fuel pump, or the like, that is located outside the EECU overspeed protection component 102. The high and low side controls 116, 122 connect to the fuel shutoff device 128 in manner that requires consensus between the high and low side controls 116, 122 to control the fuel shutoff device 128 to shutoff fuel flow to an engine. Each of the high and low side controls 116, 122 includes a respective switch 130, 132 which the respective high or low side control 116, 122 controls based on the input received from the processor 104. If the switches 130, 132 are both closed, a loop is completed, through a first switch 130, through the fuel shutoff device 128, and through a second switch 132, e.g., closing a loop allowing current to flow from the high side, through the fuel shutoff, and then back through the low side to a ground, to ensure consensus between the high and low side controls 116, 122 or else the fuel shutoff device 128 will not shut off fuel flow to the engine.

A method of overspeed protection for a gas turbine engine includes receiving input from a first speed sensor interface 106 indicative of engine speed into a first time-space partition 108 of a processor and receiving input from a second speed sensor interface 112 indicative of engine speed into a second time-space partition 114 of the processor 104. The first time-space partition 108 outputs the first discrete 118 command to the high side control 116 and outputs the first serial command 120 to the high side control 116. The high side control 116 closes the first switch 130 only if the discrete command 118 is ON and the serial command 120 matches a predetermined code. The second time-space partition 114 outputs the second discrete command 124 to the low side control 122 and outputs the second serial command 126 to the low side control 122. The low side control 122 closes the second switch 132 of the low side control only if the second discrete 124 command is ON and the second serial command 126 matches a predetermined code. Both of the serial commands 120, 126 can use the same sequence or code, or they can each have their own respective sequence or code. The method includes actuating the fuel shutoff device 128 only if the first and second switches 130, 132 are both closed.

The processor 104 includes a connection 138 for cross-partition command monitoring between the first and second time-space partitions 108, 114. The method can include checking output of the first and second time-space partitions 108, 114 with a lockstep core of the processor 104. The lockstep core performs all of the same exact calculations as the main core. However, it checks the main core at a lower level, i.e., the lockstep core checks that the actual instructions and results of instructions of the two cores are identical (without concerns for what the instructions and results actually mean). The method can also include cross partition monitoring. The cross partition monitoring is not the same as the lock step core cross check. The cross partition monitoring allows the two partitions to exchange signals with one another. The signals being exchanged can be used to ensure that both time-space partitions agree upon what the state of the discrete/serial commands should be, e.g., if one time-space partition thinks the high/low side control should be turned on, but the other thinks it should be turned off, this may be indicative of a failure. This cross partition monitoring can all take place within the main core.

The systems and methods disclosed herein provide an EECU overspeed protection architecture that can utilize numerous features to preclude a single point failure that would result in commanding fuel off within the EECU from commanding fuel off, while using only a single processor. These features include separate high side and low side fuel shut off command control, a processor with a lockstep core, time-space partitions within the processor software and memory, one each for high and low side command control, cross partition command monitoring, identical engine speed input interfaces, one for each time space partition, and fuel shut off command generation that utilizes both discrete and serial communication outputs from each time space partitions of the processor, in order to benefit from dissimilarity.

Potential benefits of this architecture include the following. In a single control channel EECU, two processors may be used in the overspeed protection function to preclude a single point failure within the EECU from commanding fuel off. The single processor architecture presented herein can provide in reduced cost, complexity, size, weight, and power utilization relative to a two processor architecture, while still precluding single point failures from shutting off fuel to the engine.

The methods and systems of the present disclosure, as described above and shown in the drawings, provide for overspeed protection in gas turbine engines wherein the system and method do not introduce any single point failure scenarios to the overspeed protection that would result in commanding fuel off. While the apparatus and methods of the subject disclosure have been shown and described with reference to preferred embodiments, those skilled in the art will readily appreciate that changes may be made thereto without departing from the scope of the invention as defined by the claims.

## Claims

1. A system comprising:
a processor (104);
a first speed sensor interface (106) operatively connected to a first time-space partition of the processor, wherein the first speed sensor interface is configured to receive input from a sensor package (110) and to provide output indicative of engine speed to the first time-space partition based on the input from the sensor package;
a second speed sensor interface (112) operatively connected to a second time-space partition of the processor, wherein the first speed sensor interface is configured to receive input from the sensor package and to provide output indicative of engine speed to the second time-space partition based on the input from the sensor package;
a high side control (116) operatively connected to the first time-time space partition to receive a discrete command from the first time-space partition, and to receive a serial command from the first time-space partition; and
a low side control (122) operatively connected to the second time-time space partition to receive a discrete command from the second time-space partition, and to receive a serial command from the second time-space partition;
wherein the high side control and the low side control are configured to connect to an outside fuel shutoff device in manner that requires consensus between the high side control and the low side control to control the fuel shutoff device to shutoff fuel flow.

2. The system as recited in claim 1, further comprising the fuel shutoff device (128) operatively connected to the high side control and to the low side control to shut off fuel flow upon completion of a loop through a first switch in the high side control, through the fuel shutoff device, and through a second switch in the low side control to ensure consensus between the high side control and the low side control.

3. The system as recited in claim 1 or 2, further comprising the sensor package (110) operatively connected to the first and second speed sensor interfaces.

4. The system as recited in claim 3, wherein the sensor package includes a single sensor (134) with a sensor channel connecting the single sensor to both the first and second speed sensor interfaces.

5. The system as recited in claim 3, wherein the sensor package includes:
a first sensor with a first channel connecting the first sensor to the first speed sensor interface; and
a second sensor with a second channel connecting the second sensor to the second speed sensor interface.

6. The system as recited in any preceding claim, wherein the processor includes a connection (138) for cross-partition command monitoring between the first and second time-space partitions.

7. The system as recited in any preceding claim, wherein the first and second time-space partitions are each configured to output a respective ON/OFF discrete command to the respective high side control and the low side control.

8. The system as recited in claim 7, wherein the first and second time-space partitions are each configured to output a respective coded series of ON/OFF bits in a predetermined pattern as serial commands to the respective high side control and the low side control to verify the ON/OFF discrete command is not in a stuck state.

9. The system as recited in any preceding claim, wherein the first and second time-space partitions are both within a single core of the processor.

10. The system as recited in claim 9, further comprising a lockstep core of the processor operatively connected to the single core of the processor.

11. The system as recited in claim 10, wherein the lockstep core is configured to verify all operations/calculations of the single core.

12. A method of overspeed protection for a gas turbine engine comprising:
receiving input from a first speed sensor interface indicative of engine speed into a first time-space partition of a processor;
receiving input from a second speed sensor interface indicative of engine speed into a second time-space partition of the processor;
outputting a first discrete command from the first time-space partition to a high side control;
outputting a first serial command from the first time space partition to the high side control;
closing a first switch of the high side control only if the first discrete command is ON and the first serial command matches a predetermined code;
outputting a second discrete command from the second time-space partition to a low side control;
outputting a second serial command from the second time space partition to the low side control;
closing a second switch of the low side control only if the second discrete command is ON and the second serial command matches a predetermined code; and
actuating a fuel shutoff device only if the first and second switches are both closed.

13. The method as recited in claim 12, further comprising checking all operations/calculations of the single core with a lockstep core of the processor.

14. The method as recited in claim 12, further comprising receiving sensor input into both the first and second speed sensor interfaces from one sensor channel.

15. The method as recited in claim 14, further comprising:
receiving sensor input into the first speed sensor interface from a first sensor channel; and
receiving sensor input into the second speed sensor interface from a second sensor channel that is independent from the first sensor channel.
